Europäisches Patentamt

European Patent Office

Office européen des brevets

(11) Numéro de publication: **0 349 442**
**A1**

## DEMANDE DE BREVET EUROPEEN

(21) Numéro de dépôt: 89401891.0

(22) Date de dépôt: 30.06.89

(51) Int. Cl.⁵: **H 01 S 3/00**

(30) Priorité: 01.07.88 FR 8808917

(43) Date de publication de la demande:
03.01.90 Bulletin 90/01

(84) Etats contractants désignés: **DE FR GB SE**

(71) Demandeur: **COMMISSARIAT A L'ENERGIE ATOMIQUE**
**31/33, rue de la Fédération**
**F-75015 Paris (FR)**

(72) Inventeur: **Etievant, Claude**
**44 rue Saint Charles**
**F-78000 Versailles (FR)**

(74) Mandataire: **Mongrédien, André et al**
**c/o BREVATOME 25, rue de Ponthieu**
**F-75008 Paris (FR)**

(54) Dispositif de prélèvement d'un faisceau secondaire à partir d'un faisceau laser principal.

(57) Dispositif de prélèvement d'un faisceau secondaire, à partir d'un faisceau laser principal, comprenant pour soumettre ledit faisceau principal à une onde acoustique stationnaire un premier transducteur apte à engendrer à partir d'un signal électrique périodique de fréquence f, une onde acoustique progressive de même fréquence, un second transducteur apte à engendrer à partir dudit signal électrique de fréquence f, une onde acoustique progressive de même fréquence, le second transducteur (20) étant placé en regard du premier transducteur (10) de façon à former une cavité résonnante ultrasonore à l'intérieur de laquelle les ondes acoustiques issues des premier et second transducteurs interfèrent, un générateur connecté aux premier et second transducteurs (10, 20) et leur fournissant ledit signal électrique.

FIG. 3A

FIG. 3B

EP 0 349 442 A1

# Description

## DISPOSITIF DE PRELEVEMENT D'UN FAISCEAU SECONDAIRE A PARTIR D'UN FAISCEAU LASER PRINCIPAL

La présente invention a pour objet un dispositif de prélèvement d'un faisceau secondaire à partir d'un faisceau laser principal. Elle s'applique notamment aux mesures de puissance et de profil d'intensité du faisceau principal en temps réel et sans perturbation de ce faisceau. Ce dispositif concerne essentiellement les lasers infrarouges.

Depuis leur création, un intérêt particulier est porté aux lasers infrarouges de grande puissance (de l'ordre du kW et plus) en régime impulsionnel ou continu. Ces lasers trouvent des utilisations dans le traitement de surface des matériaux, la soudure, le perçage, la découpe...

De telles applications nécessitent la maîtrise des paramètres du faisceau laser (sa géométrie, sa puissance). Un contrôle efficace implique la mesure, en temps réel, du profil d'intensité et de la puissance du faisceau. Pour ne pas perturber la tâche à effectuer mais aussi pour ne pas détruire les détecteurs en les soumettant à de trop fortes intensités lumineuses, on prélève à partir du faisceau principal un faisceau secondaire de faible intensité (de l'ordre du mW et moins).

Les principaux dispositifs connus font appel à des éléments de séparation tels qu'une lame séparatrice placée sur le parcours du faisceau. Cette lame réfléchit un faible pourcentage de l'intensité du faisceau principal ; des mesures de profil d'intensité ou de puissance sont alors aisément praticables sur ce faisceau réfléchi, image du faisceau principal (connaissant le coefficient de réflexion de la lame, la puissance du faisceau principal se déduit facilement de la mesure de la puissance réfléchie).

Ces dispositifs connus présentent un inconvénient majeur : soumis au rayonnement intense des lasers de puissance, ils absorbent une certaine quantité d'énergie lumineuse. L'échauffement provoqué par ce phénomène entraîne à la longue une détérioration des dispositifs. Les coefficients de réflexion n'ont plus leur valeur nominale, et le profil du faisceau réfléchi ne correspond plus au profil du faisceau principal.

La présente invention pallie cet inconvénient des dispositifs de séparation connus. Elle ne perturbe pratiquement pas le faisceau principal et n'est pas détruite par son rayonnement intense. Elle préconise pour cela l'utilisation d'une interaction de type Rayleigh-Brillouin entre le faisceau laser et une onde acoustique stationnaire. Cette onde acoustique stationnaire est engendrée dans l'air à l'intérieur d'une cavité résonante ultrasonore formée de deux transducteurs en regard et délivrant des ondes acoustiques progressives contre-propageantes. L'onde acoustique stationnaire forme un réseau de diffraction dans une direction sensiblement perpendiculaire à la direction de propagation du faisceau lumineux.

De façon plus précise, l'invention concerne un dispositif de prélèvement d'un faisceau secondaire à partir d'un faisceau laser principal. Ce dispositif comprend, pour soumettre ledit faisceau principal à une onde acoustique stationnaire, un premier transducteur apte à engendrer à partir d'un signal électrique périodique de fréquence f, une onde acoustique progressive de même fréquence ; un second transducteur apte à engendrer à partir dudit signal électrique de fréquence f, une onde acoustique progressive de même fréquence, le second transducteur étant placé en regard du premier transducteur de façon à former une cavité résonnante ultrasonore à l'intérieur de laquelle les ondes acoustiques issues des premier et second transducteurs interfèrent ; un générateur connecté aux premier et second transducteurs et leur fournissant ledit signal électrique.

Les transducteurs sous l'excitation électrique entrent en vibration résonnante à la fréquence f du signal électrique et engendrent chacun une onde acoustique progressive dans l'air ambiant. L'indice de l'air est modulé par l'onde acoustique stationnaire résultant de l'interaction des deux ondes progressives contre-propageantes et forme l'équivalent d'un réseau de diffraction (réseau d'indice). Cette onde stationnaire, sensiblement perpendiculaire au faisceau lumineux, entraîne une diffraction de ce dernier. On obtient ainsi un faisceau secondaire, image du faisceau principal.

Selon un mode de réalisation préféré, au moins un des premier et second transducteurs présente une face concave.

De cette manière, on assure la stabilité de la cavité résonnante .

De préférence, la fréquence f des ondes acoustiques progressives est choisie dans une gamme allant de 0,5 à 3 MHz.

Le choix de la fréquence dépend de critères géométriques (diamètre du faisceau lumineux, séparation souhaitée entre le faisceau lumineux principal et le faisceau secondaire ...) et de la longueur d'onde du faisceau lumineux.

Selon une caractéristique secondaire du dispositif, la cavité résonnante ultrasonore est accordée en ajustant la valeur de la fréquence f.

Une faible variation de fréquence est suffisante pour obtenir l'accord de la cavité. Ce dernier est donc réalisé beaucoup plus simplement qu'avec un ajustement mécanique de la distance entre les deux transducteurs.

Le matériau, siège de l'interaction entre l'onde acoustique et le faisceau lumineux, est donc l'air ambiant. Ce matériau gazeux ne risque pas de brûler et ne présente pas d'état de surface à protéger. Il est disponible facilement et ne nécessite pas d'entretien particulier.

Pour pouvoir déterminer les paramètres du faisceau, le dispositif de prélèvement est couplé à des moyens de détection d'un faisceau lumineux.

Le réseau de diffraction formé par l'onde acoustique stationnaire présente un maximum d'efficacité périodiquement à la fréquence 2f. Le faisceau secondaire est donc modulé à cette fréquence.

De manière préférée, la détection est effectuée périodiquement à la fréquence 2f. De cette façon, le rapport signal/bruit est amélioré.

Les caractéristiques et avantages de l'invention apparaîtront mieux après la description qui suit donnée à titre explicatif et nullement limitatif. Cette description se réfère à des dessins annexés, sur lesquels :

- les figures 1A et 1B représentent schématiquement une vue de dessus et une coupe suivant l'axe AA respectivement, d'un dispositif à onde progressive délivrée par un transducteur unique,

- les figures 2A et 2B représentent schématiquement une vue de dessus et une coupe suivant l'axe BB respectivement, d'une variante de réalisation du précédent dispositif,

- les figures 3A et 3B représentent schématiquement une vue de dessus et une coupe suivant l'axe CC respectivement, d'un dispositif selon l'invention,

- la figure 4 représente schématiquement un dispositif selon l'invention muni d'un dispositif de mesure de puissance et d'une détection synchrone à la fréquence 2f,

- la figure 5 représente schématiquement un dispositif selon l'invention muni d'un dispositif d'analyse de profil.

La figure 1A représente schématiquement une vue de dessus d'un dispositif de prélèvement à onde progressive délivrée par un transducteur unique. On voit le transducteur 10 fixé sur son support 12 et relié à un générateur d'ondes électriques 14. Le transducteur peut être par exemple en niobate de lithium (LiNbO$_3$) ou en titanate de baryum (BaTiO$_3$) du type de ceux fabriqués et commercialisés par la Société Quartz et Silice.

Le transducteur 10 entre en vibration sous l'effet du signal électrique à la fréquence f délivré par le générateur 14 et engendre dans l'air ambiant une onde acoustique progressive à la fréquence f. Cette onde acoustique module l'indice de l'air et forme l'équivalent d'un réseau de diffraction.

L'interaction entre l'onde acoustique et le faisceau lumineux 16 engendre deux faisceaux lumineux diffractés de part et d'autre du faisceau 16, d'intensité très faible devant l'intensité du faisceau lumineux 16.

La perturbation subie par le faisceau principal 16 est négligeable (environ 6 ordres de grandeur entre les puissances incidente et diffractées).

Le réseau formé par l'onde acoustique est généralement un réseau "fin". Pour une bonne efficacité de la diffraction, il suffit que les ondes acoustique et lumineuse se propagent sensiblement perpendiculairement.

Il est bien entendu que le changement de valeur de certains paramètres entraînerait le passage d'une diffraction sur un réseau "fin" à une diffraction sur un réseau "épais". Dans ce cas, le faisceau lumineux doit attaquer l'onde acoustique sous l'angle de Bragg facilement déterminé par l'homme du métier.

Une onde acoustique délivrée par un transducteur plan présente une divergence. La diffraction d'un faisceau lumineux par une onde acoustique est la plus efficace lorsque le faisceau acoustique est parallèle. Afin d'obtenir un faisceau acoustique parallèle ayant la forme d'une nappe plane, on peut utiliser un transducteur dont la surface est cylindrique concave de manière à compenser la divergence. On peut aussi ajouter un réflecteur (non représenté) sur l'arrière du transducteur, simple pièce réfléchissante prolongeant le transducteur et permettant la compensation de la divergence.

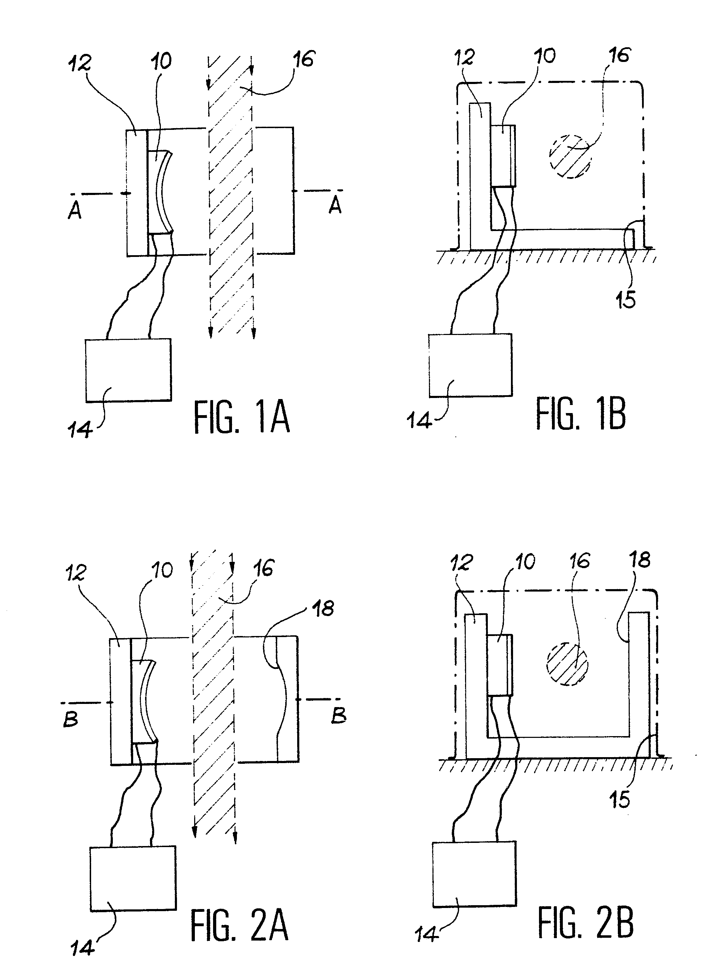

La figure 1B est une coupe du dispositif précédant selon l'axe AA repéré sur la figure 1A. Le tranducteur 10 est placé le plus près possible du faisceau 16 pour éviter une perte d'efficacité de la diffraction dûe à l'amortissement de l'onde acoustique dans l'air.

L'air ambiant est le siège de l'interaction entre l'onde acoustique et le faisceau lumineux principal 16. Des perturbations provoquées par des déplacements au voisinage du dispositif entraînent des variations locales de l'indice de l'air et faussent les mesures. De manière avantageuse, on place donc tout le parcours du faisceau acoustique sous un capot protecteur 15 évitant les déplacements d'air intempestifs. On peut aussi créer l'onde acoustique dans un gaz autre que l'air ambiant, par exemple émis par une buse de géométrie convenable.

Les figures 2A et 2B représentent une variante de réalisation du précédent dispositif. La figure 2A représente schématiquement une vue de dessus d'un tel dispositif et la figure 2B une vue en coupe selon l'axe BB représenté sur la figure 2A. Le réseau de diffraction engendré par le dispositif est ici créé à partir d'une onde acoustique stationnaire obtenue par les interférences produites par la réflexion de l'onde acoustique progressive sur une surface 18 réfléchissante. L'ensemble composé par le transducteur 10 et la surface 18 réfléchissante en regard forme une cavité résonnante stable : le faisceau acoustique qu'elle contient n'est pas divergent. En assurant au transducteur 10 et à la surface 18 réfléchissante une concavité convenable (dont le rayon de courbure peut être supérieur ou égal au double de la longueur d'onde de la cavité acoustique) on obtient un faisceau pratiquement parallèle à l'intérieur de la cavité.

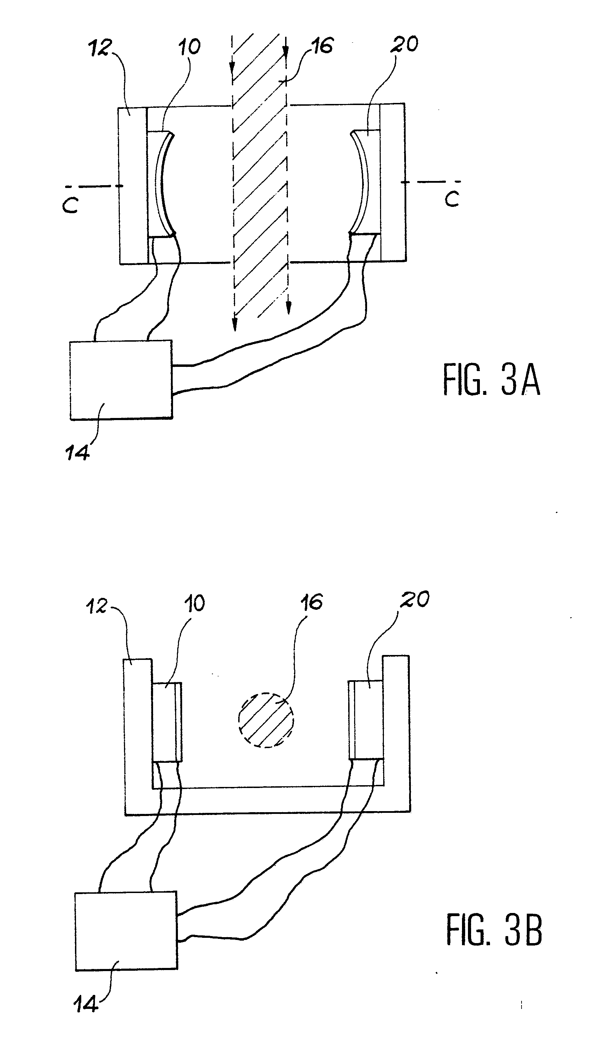

Les figures 3A et 3B représentent schématiquement un dispositif selon l'invention. Le réseau de diffraction est réalisé à partir d'une onde stationnaire ; cette dernière est engendrée par les interférences entre deux ondes acoustiques progressives contre-propageantes issues de deux transducteurs 10, 20 disposés en regard. Les deux transducteurs 10, 20 sont reliés au générateur d'ondes électriques 14 ; ils forment une cavité résonante ultrasonore.

La figure 3A représente une vue de dessus de ce dernier dispositif ; la figure 3B représente une coupe selon l'axe CC présenté figure 3A. L'écart entre les deux transducteurs 10, 20 est tel que les amplitudes des deux ondes acoustiques contre propageantes puissent interférer sans que l'amortissement vienne perturber la création du réseau. Cet écart est de 2 à 5 cm par exemple, pour un faisceau lumineux de 1 cm de diamètre.

Le choix de la fréquence acoustique est conduit par deux considérations. L'angle de déviation i doit être suffisant pour permettre une séparation appréciable entre le faisceau principal 16 et les faisceaux diffractés. Cet angle dépend de la longueur d'onde du laser (donc fixée) et de la fréquence f de l'onde acoustique. Plus cette fréquence f est élevée et plus l'angle i de déviation est grand. Mais si l'on augmente trop la valeur de la fréquence f, l'onde acoustique est amortie dans l'air au point qu'elle est inutilisable pour la diffraction d'un faisceau lumineux. La fréquence f des ondes acoustiques est choisie dans une gamme allant de 0,5 à 3 MHz.

Les deux considérations précédentes font que dans l'air, le dispositif est particulièrement bien adapté à un faisceau lumineux infrarouge ayant une longueur d'onde d'environ 10 micromètres. On peut sans sortir du cadre de l'invention se placer dans l'atmosphère d'un autre gaz pour obtenir des coefficients élastiques et des valeurs d'indices différents ou pour réduire l'absorption des ondes ultrasonores par ce gaz.

Les faces en regard des transducteurs 10 et 20 sont concaves. Cela permet d'obtenir une meilleure stabilité de la cavité et ainsi d'assurer une diffraction homogène du faisceau lumineux.

Selon l'invention, l'accord de la cavité obtenu en faisant varier et en ajustant la fréquence. Ce réglage est beaucoup plus aisé qu'un réglage mécanique de la distance entre les transducteurs 10 et 20.

Pour effectuer des mesures de caractérisation d'un faisceau lumineux, le dispositif de prélèvement est couplé à des moyens de mesure.

On peut mettre à profit le battement des deux ondes lumineuses diffractées dont l'écart de fréquence est 2f dans le cas d'une diffraction par une onde acoustique stationnaire produite par les transducteurs 10, 20. Le signal délivré par un détecteur quadratique comporte une composante à la fréquence 2f qui peut être amplifiée sélectivement de façon à augmenter le rapport signal sur bruit.

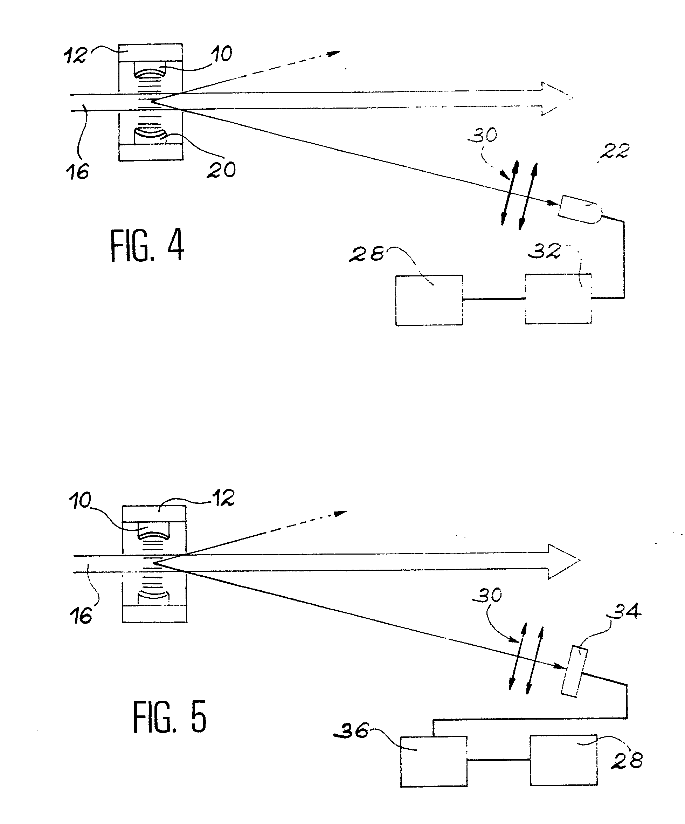

Comme on le voit sur la figure 4, le faisceau secondaire est focalisé sur un mesureur de puissance 22 par une optique de focalisation 30. Ce dernier est relié à un amplificateur 32, synchrone à la fréquence 2f. Les lumières parasites modulées à d'autres fréquences sont ainsi éliminées.

L'amplificateur 32 est relié à un analyseur de signal 28.

La figure 5 représente schématiquement un dispositif selon l'invention muni d'un dispositif d'analyse de profil. Une optique de focalisation 30 permet d'adapter le diamètre d'un des faisceaux diffractés au diamètre de la surface sensible du dispositif d'analyse de profil 34. Ce dernier peut être réalisé par une matrice de détecteurs permettant l'analyse de la distribution d'intensité par exemple. De tels dispositifs sont fabriqués et commercialisés par la Société Anonyme des Télécommunications par exemple. Ce sont des matrices de détecteurs HgCdTe qu'il faut utiliser à basse température dans un cryostat (non représenté).

Cette matrice de détecteurs est lue par multiplexage. Un lecteur-amplificateur 36 relié au dispositif d'analyse 34 permet cette opération. Ce lecteur est relié à des moyens 28 qui permettent entre autres la visualisation de la distribution de l'intensité dans le faisceau secondaire, image du faisceau principal.

On peut avantageusement disposer une amplification synchrone dans ce dispositif pour améliorer le rapport signal sur bruit.

Le dispositif selon l'invention permet donc les mesures en temps réel des différents paramètres caractéristiques d'un faisceau lumineux. Ces mesures peuvent être effectuées sans destruction des moyens de mesure grâce à l'emploi d'un gaz (préférentiellement de l'air) comme milieu dispersif permettant d'effectuer le prélèvement d'un faisceau secondaire de faible intensité à partir du faisceau principal à caractériser. Le faisceau principal n'est pas perturbé par le prélèvement, son intensité étant très supérieure à l'intensité du faisceau secondaire.

**Revendications**

1. Dispositif de prélèvement d'un faisceau secondaire, à partir d'un faisceau laser principal, caractérisé en ce qu'il comprend, pour soumettre ledit faisceau principal à une onde acoustique stationnaire :
- un premier transducteur (10) apte à engendrer à partir d'un signal électrique périodique de fréquence f, une onde acoustique progressive de même fréquence,
- un second transducteur (20) apte à engendrer à partir dudit signal électrique de fréquence f, une onde acoustique progressive de même fréquence, le second transducteur (20) étant placé en regard du premier transducteur (10) de façon à former une cavité résonnante ultrasonore à l'intérieur de laquelle les ondes acoustiques issues des premier et second transducteurs (10, 20) interfèrent,
- un générateur connecté aux premier et second transducteurs (10, 20) et leur fournissant ledit signal électrique.

2. Dispositif selon la revendication 1, caractérisé en ce qu'au moins un des premier et second transducteurs (10, 20) présente une face concave.

3. Dispositif selon la revendication 1, caractérisé en ce que ladite fréquence f est comprise dans une gamme allant de 0,5 à 3 MHz.

4. Dispositif selon la revendication 1, caractérisé en ce que la cavité résonnante ultrasonore est accordée en ajustant la valeur de la fréquence f.

5. Dispositif selon la revendication 1, comprenant en outre des moyens de détection d'un faisceau lumineux, caractérisé en ce que la détection est effectuée périodiquement à la fréquence 2f.

FIG. 1A

FIG. 1B

FIG. 2A

FIG. 2B

12    10    16    20

FIG. 3A

14

12    10    16    20

FIG. 3B

14

FIG. 4

FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 741 648  (G.H. NICKEL)<br>* Résumé; colonne 1, lignes 5-36;<br>colonne 2, lignes 17-21 *<br>----- | 1 | H 01 S    3/00 |

DOMAINES TECHNIQUES RECHERCHES (Int. Cl.5)

H 01 S
G 02 F

Le présent rapport a été établi pour toutes les revendications

| Lieu de la recherche | Date d'achèvement de la recherche | Examinateur |
|---|---|---|
| LA HAYE | 10-10-1989 | GALANTI M. |